(19) Europäisches Patentamt / European Patent Office / Office européen des brevets

(11) **EP 4 372 953 A1**

(12) **EUROPEAN PATENT APPLICATION**
published in accordance with Art. 153(4) EPC

(43) Date of publication:
**22.05.2024 Bulletin 2024/21**

(21) Application number: **22841063.5**

(22) Date of filing: **25.05.2022**

(51) International Patent Classification (IPC):
**H02J 7/00** (2006.01)   **H02M 3/335** (2006.01)
**H01M 10/44** (2006.01)

(52) Cooperative Patent Classification (CPC):
Y02E 60/10

(86) International application number:
**PCT/CN2022/094950**

(87) International publication number:
**WO 2023/284423 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2021   CN 202110806593**

(71) Applicant: **Sungrow Power Supply Co., Ltd.
Hefei, Anhui 230088 (CN)**

(72) Inventors:
• **HE, Wei**
  **Hefei, Anhui 230088 (CN)**
• **CHEN, Fei**
  **Hefei, Anhui 230088 (CN)**
• **LI, Pengju**
  **Hefei, Anhui 230088 (CN)**

(74) Representative: **Zacco Norway AS
P.O. Box 488 Skøyen
0213 Oslo (NO)**

(54)   **BALANCE CONTROL METHOD AND ENERGY STORAGE SYSTEM**

(57)   Provided are a balance control method and an energy storage system. Once a battery module is newly added, according to SOC values of battery modules, a control apparatus (11) determines a target battery module for which SOC adjustment needs to be performed from among a plurality of battery modules, and controls a switch corresponding to the target battery module to close, so as to adjust the SOC of the target battery module by means of a circuit where a bidirectional DC/DC apparatus (12) is located, until the SOCs of the plurality of battery modules are balanced. Since an energy storage system which comprises a bidirectional DC/DC apparatus (12), a control apparatus (11), a plurality of battery modules and corresponding connection relationships is used, battery modules having unbalanced SOCs may be automatically adjusted when a battery module is newly added. Finally, the SOCs of all battery modules are balanced, thereby improving the reliability of the operation of the energy storage system.

Determine, based on SOC of all battery packs, a target battery pack at SOC to be regulated among the battery packs — S11

Turn on a switch of the target battery pack, and regulate the SOC of the target battery pack through a loop where a bidirectional DC-to-DC device is arranged until all the battery packs are balanced in SOC — S12

**Figure 5**

EP 4 372 953 A1

## Description

The present application claims priority to Chinese Patent Application No. 202110806593.0, titled "METHOD FOR BATTERY BALANCE, AND ENERGY STORAGE SYSTEM", filed on July 16, 2021 with the China National Intellectual Property Administration, which is incorporated herein by reference in its entirety.

## FIELD

The present disclosure relates to the field of energy storage power stations, and in particular to a method for battery balancing and an energy storage system.

## BACKGROUND

Energy storage power stations such as household energy storage systems are increasingly used as the demand for electricity increases.

Battery capacity of some energy storage systems is expandable while meeting requirements for normal operation. That is, battery packs in these energy storage systems are increasable in number.

The case that a newly added battery pack for an energy storage system and a battery pack already in the energy storage system are off balance in SOC (state of charge) likely results in an imbalance in the SOC between battery packs, reducing operation reliability of the energy storage system.

## SUMMARY

A method for battery balancing and an energy storage system are provided according to the present disclosure, to solve the problem of low operation reliability of the energy storage system due to the fact that a battery pack newly added to the energy storage system and a battery pack already in the energy storage system are off balance in SOC.

The following technical solutions are provided according to the present disclosure in order to solve the above problem.

A method for battery balancing is provided. The method is applied to a control device in an energy storage system. The energy storage system includes a bidirectional DC-to-DC device, battery packs, and respective switches of the battery packs besides the control device. The control device is connected to the bidirectional DC-to-DC device, the battery packs and the switches. The battery packs are connected in series to a first side of the bidirectional DC-to-DC device. The battery packs are connected to a second side of the bidirectional DC-to-DC device via the switches. The method includes: determining, based on SOC of all the battery packs, a target battery pack at the SOC to be regulated among the battery packs; and controlling the switch of the target battery pack to be switched on and regulating the SOC of the target battery pack through a loop where the bidirectional DC-to-DC device is arranged, until all the battery packs are balanced in SOC.

In an embodiment, the determining, based on the SOC of the battery packs, the target battery pack at the SOC to be regulated among the battery packs includes: determining whether a real-time average SOC of all the battery packs is not less than a preset average SOC threshold and determining whether a total voltage of all the battery packs is not less than a preset total voltage, in response to a newly added battery pack of the energy storage system or when a preset time instant for SOC regulation is reached; acquiring respective voltages of all the battery packs, if it is determined that the real-time average SOC is not less than the preset average SOC threshold and the total voltage is not less than the preset total voltage; adding the acquired voltages to obtain a sum; determining whether a difference between the sum and the total voltage is within a preset difference range; and determining, based on the SOC of all the battery packs, the target battery pack at the SOC to be regulated among all the battery packs, if it is determined that the difference is within the preset difference range.

In an embodiment, the determining, based on the SOC of all the battery packs, the target battery pack at the SOC to be regulated among all the battery packs includes: acquiring the SOC for each of all the battery packs and the real-time average SOC of all the battery packs; and selecting, from all the battery packs, battery packs at SOC with differences greater than a preset threshold from the real-time average SOC, and sequentially determining the selected battery packs as the target battery pack in descending order of the differences.

In an embodiment, the controlling the switch of the target battery pack to be switched on and regulating the SOC of the target battery pack through the loop where the bidirectional DC-to-DC device is arranged, until all the battery packs are balanced includes: turning the switch of the target battery pack on, indicating a direction in which a current flowing through the target battery pack, and regulating the SOC of the target battery pack through the loop where the bidirectional DC-to-DC device is arranged, until all the battery packs are balanced.

In an embodiment, the turning the switch of the target battery pack on, indicating the direction in which the current flowing through the target battery pack, and regulating the SOC of the target battery pack through the loop where the bidirectional DC-to-DC device is arranged, until all the battery packs are balanced includes: comparing the SOC of the target battery pack with a real-time average SOC of all the battery packs to obtain a comparison result; turning the switch of the target battery pack on, and indicating the direction in which the current flowing through the target battery pack as matching the comparison result; determining in real time whether a difference between the SOC of the target battery pack and the real-time average SOC is less than a set threshold while regulating the SOC of the target battery pack according to the indicated direction; and selecting, when the difference between the SOC of the target battery pack and the real-time average SOC is less than the set threshold and from all the battery packs, another battery pack at SOC with a greatest difference greater than a preset threshold from the real-time average SOC, and determining the selected battery pack as the target battery pack, until all the battery packs are balanced.

In an embodiment, the indicating the direction in which the current flowing through the target battery pack as matching the comparison result includes: indicating the direction for discharging, if the comparison result indicates that the SOC of the target battery pack is greater than the real-time average SOC, wherein the direction for discharging is from the target battery pack to the second side of the bidirectional DC-to-DC device; and indicating the direction for charging, if the comparison result indicates that the SOC of the target battery pack is less than the real-time average SOC, wherein the direction for charging is opposite to the direction for discharging.

In an embodiment, the method further includes: shutting all the battery packs down when it is determined that the difference between the sum and the total voltage is not within the preset difference range.

In an embodiment, the energy storage system includes an AC/DC device, and the method further includes: charging, if it is determined based on the SOC of all the battery packs that at least one battery pack among all the battery packs is to be charged and an input terminal of the AC-to-DC device is already connected to the external power supply, the determined battery pack, when it is determined that the real-time average SOC is less than the preset average SOC threshold or that the sum is less than the preset total voltage.

In an embodiment, the battery pack to be charged is determined by: acquiring the SOC for each of all the battery packs; and sequentially determining all the battery packs at SOC less than a highest SOC as the battery pack to be charged.

In an embodiment, the charging the determined battery pack includes: turning the switch of the determined battery pack on, indicating a direction in which a current flowing through the determined battery pack to a preset direction, and charging the determined battery pack until the determined battery pack reaches the highest SOC, wherein the preset direction is from the AC-to-DC device to the first side of the bidirectional DC-to-DC device; and charging all the battery packs, when all reaching the highest SOC, via a loop formed by the battery packs and the AC-to-DC device, until all the battery packs reach SOC greater than a preset SOC threshold.

In an embodiment, the method further includes: recording the number of all the battery packs at a preset position in a switch box control device, in case of no battery pack at SOC with the difference greater than the preset threshold from the real-time average SOC.

An energy storage system is provided. The energy storage system includes a bidirectional DC/DC device, a control device, battery packs, and respective switches of the battery packs. The control device is connected to the bidirectional DC/DC device, the battery packs and the switches. The battery packs are connected in series to a first side of the bidirectional DC/DC device. The battery packs are connected to a second side of the bidirectional DC/DC device through the switches. The control device is configured to: determine, based on SOC of all the battery packs, a target battery pack at SOC to be regulated among the battery packs; and control the switch of the target battery pack to be switched on and regulate the SOC of the target battery pack through a loop where the bidirectional DC-to-DC device is arranged, until all the battery packs are balanced in SOC.

In an embodiment, the energy storage system further includes an AC/DC device. An input terminal of the AC-to-DC device is configured to be connected to an external power supply. An output terminal of the AC-to-DC device is connected in series to the battery packs and is connected to the first side of the bidirectional DC-to-DC device. A control terminal of the AC-to-DC device is connected to the control device. The control device is further configured to perform controlling to charge, if it is determined based on the SOC of all the battery packs that at least one battery pack among all the battery packs is to be charged and the input terminal of the AC-to-DC device is already connected to the external power supply, the determined battery pack.

In an embodiment, the AC/DC device includes a rectifying circuit and a voltage stabilizing circuit. An input terminal of the rectifying circuit is configured to be connected to the external power supply. An output terminal of the rectifying circuit is connected to an input terminal of the voltage stabilizing circuit. An output terminal of the voltage stabilizing circuit is connected in series to the battery packs and is connected to the first side of the bidirectional DC/DC device. A control terminal of the rectifying circuit and a control terminal of the voltage stabilizing circuit are both connected to the control device.

In an embodiment, the control device is further connected to a switch box control device in the energy storage system via the battery packs.

Compared with the conventional technology, the present disclosure has the following beneficial effects.

A method for battery balancing and an energy storage system are provided according to the present disclosure. The energy storage system includes: a bidirectional DC/DC device, a control device, battery packs, and respective switches of the battery packs. The control device is connected to the bidirectional DC/DC device, the battery packs, and the switches. The battery packs are connected in series to form a battery pack string which is connected to a first side of the bidirectional DC/DC device. The battery packs are connected to a second side of the bidirectional DC/DC device through the switches. In response to a newly added battery pack, the control device determines, based on SOC of all the battery packs, a target battery pack at SOC to be regulated among all the battery packs, controls the switch of the target battery pack to be turned off, and regulates the SOC of the target battery pack through a loop where the bidirectional DC-to-DC device is arranged until all the battery packs are balanced in SOC. In the present disclosure, with the energy storage system including the bidirectional DC-to-DC device, the control device and the battery packs as connected above, the battery packs that are off balance in SOC can be automatically regulated in response to the newly added battery pack so as to balance all the battery packs in SOC, thereby improving operation reliability of the energy storage system.

## BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the drawings without any creative effort.

Figure 1 is a schematic diagram illustrating a scenario of connection between battery packs according to the conventional technology;

Figure 2 is a schematic structural diagram illustrating an energy storage system according to an embodiment of the present disclosure;

Figure 3 is a schematic structural diagram illustrating the energy storage system according to another embodiment of the present disclosure;

Figure 4 is a schematic structural diagram illustrating the energy storage system according to another embodiment of the present disclosure;

Figure 5 is a flowchart illustrating a method for battery balancing according to an embodiment of the present disclosure;

Figure 6 is a flowchart illustrating the method for battery balancing according to another embodiment of the present disclosure; and

Figure 7 is a flowchart illustrating the method for battery balancing according to another embodiment of the present disclosure.

## DETAILED DESCRIPTION OF EMBODIMENTS

Technical solutions of embodiments of the present disclosure are described below clearly and completely in conjunction with the drawings of the embodiments of the present disclosure. Apparently, the embodiments described below are only some rather than all the embodiments of the present disclosure. Any other embodiments obtained by those skilled in the art based on the embodiments in the present disclosure without any creative effort fall within the protection scope of the present disclosure.

Energy storage power stations such as household energy storage systems are increasingly used as the demand for electricity increases.

Battery capacity of some energy storage systems is expandable while meeting requirements for normal operation. That is, battery packs in these energy storage systems are increasable in number.

A reduction in the number of battery packs results in no imbalance in capacity and voltage between battery packs. However, an increase in the number of battery packs likely results in an imbalance in capacity and voltage between battery packs. The case that a battery pack newly added to an energy storage system and a battery pack already in the energy storage system are off balance in SOC (state of charge) results in an imbalance in the SOC between battery packs, reducing operation reliability of the energy storage system.

The battery pack to be added to the energy storage system is manually regulated to be balanced in SOC with the battery pack already in the energy storage system, and then is added to the energy storage system for use, in order to solve the problem of imbalance in SOC. The newly added battery pack is manually regulated at regular times throughout the use.

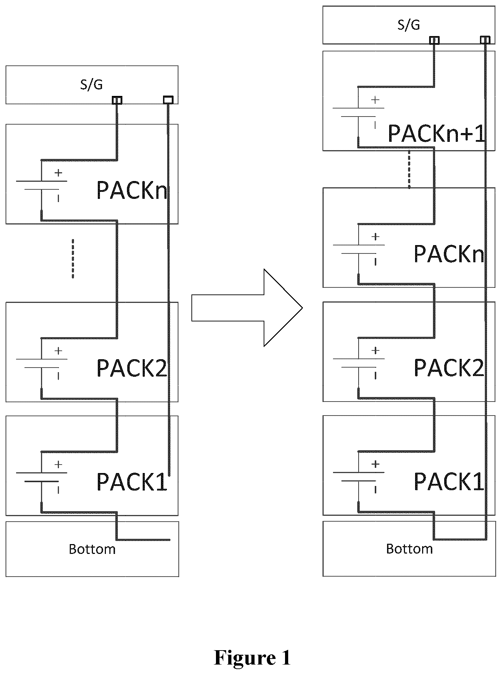

On the left of Figure 1 battery packs PACK1, PACK2, ..., PACKn (where n is a positive integer) are illustrated. The added battery pack PACKn+1 at SOC that has manually regulated is added to the system. The battery packs PACKn+1 to PACK1 are connected in series from top to bottom, and are controlled by a control box SG.

Manually regulating the SOC as above is time-consuming and laborious, resulting in high costs. In addition, manually regulating the SOC likely results in low accuracy.

In view of this, there are provided a system and a method for automatically and accurately balancing SOC between battery packs in an energy storage system in response to a newly added battery pack for the energy storage system.

The energy storage system in the embodiments of the present disclosure includes: a bidirectional DC-to-DC device, a control device, battery packs, and respective switches of the battery packs. The control device is connected to the bidirectional DC-to-DC device, the battery packs, and the switches. The battery packs are connected in series to form a battery pack string which is connected to a first side of the bidirectional DC-to-DC device. The battery packs are connected to a second side of the bidirectional DC-to-DC device through respective switches. In response to the newly added battery pack, the control device determines, based on SOC of all the battery packs, a target battery pack at SOC to be regulated among all the battery packs, controls the switch of the target battery pack to be turned off, and regulates the SOC of the target battery pack through a loop where the bidirectional DC-to-DC device is arranged until all the battery packs are balanced in SOC. In the present disclosure, with the energy storage system including the bidirectional DC-to-DC device, the control device and the battery packs as connected above, the battery packs that are off balance in SOC can be automatically regulated in response to the newly added battery pack so as to balance all the battery packs in SOC, thereby improving operation reliability of the energy storage system.

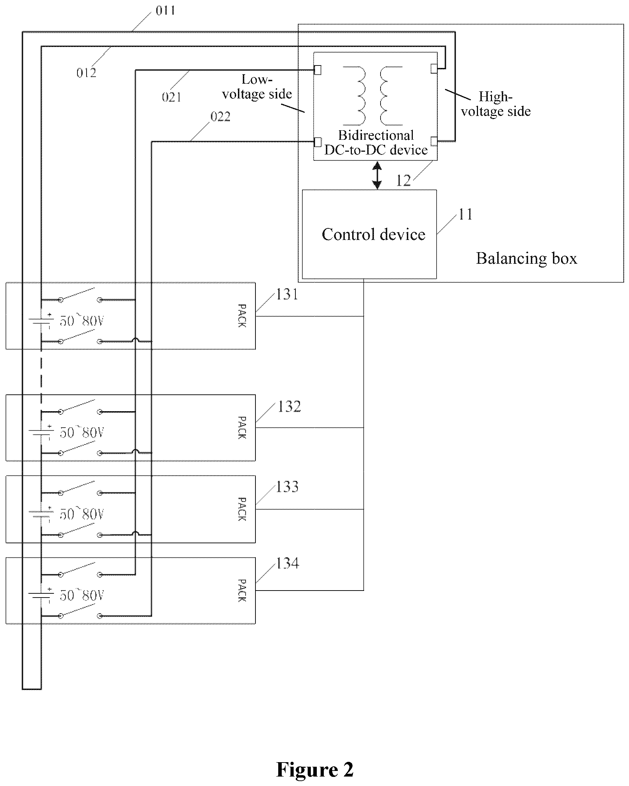

Referring to Figure 2, the energy storage system according to embodiments of the present disclosure includes: a bidirectional DC-to-DC device 12, a control device 11, battery packs, and respective switches of the battery packs. The control device 11 is connected to the battery packs, the bidirectional DC-to-DC device 12 and the switches. Referring to Figure 2, four battery packs (PACK) 131, 132, 133 and 134 are illustrated, and the battery pack 131 is newly added. In practice, the number of battery packs depends on practical application scenarios and is not limited herein. In addition, the voltage of the battery pack generally ranges from 50V to 80V.

The battery pack is rechargeable, and therefore the bidirectional DC-to-DC device 12 is arranged for the current to flow in different directions so as to charge and discharge the battery pack.

The control device 11 may be a control board. The control board and the bidirectional DC-to-DC device 12 may be arranged in a battery balancing box.

The control device 11 is connected to the battery packs for communicating with the battery packs and controlling the battery packs. The communication involves information reported by the battery pack, such as SOC, a voltage, capacity, and a cell temperature of the battery pack. The control involves information for the control device 11 to turn the switch of the battery pack on or off, information about the direction in which the current flows, and the like.

The battery packs are connected in series to form the battery pack string which is connected to a first side, i.e., a high-voltage side as illustrated in Figure 2, of the bidirectional DC-to-DC device 12. The battery packs are connected to a second side, i.e., a low-voltage side as illustrated in Figure 2, of the bidirectional DC-to-DC device 12 through respective switches.

Referring to Figure 2, the multiple battery packs are connected in series to form the battery pack string. The battery pack string is connected to two terminals on the high-voltage side of the bidirectional DC-to-DC device 12 through connection wires 011 and 012, respectively.

In addition to being connected in series, the battery packs are connected to the connection wires 021 and 022 through respective switches.

Each battery pack is connected to two switches. Specifically, a positive terminal of the battery pack is connected to a terminal on the low-voltage side of the bidirectional DC-to-DC device 12 through one of the two switches, and a negative terminal of the battery pack is connected to another terminal on the low-voltage side of the bidirectional DC-to-DC device 12 through the other switch. In this way, at least one battery pack can be connected to the bidirectional DC-to-DC device 12 through switches.

The switch may be an electronically controllable switch controlled by the control device 11, and details about the switch are not limited herein.

It should be noted that, the battery packs are not only connected in series but also connected to the second side, i.e., the low-voltage side as illustrated in Figure 2, of the bidirectional DC-to-DC device 12 through respective switches, in comparison to the conventional technology in which the battery packs are connected in series simply. Therefore, the battery packs can be charged or supply power separately, thereby balancing the battery packs in SOC.

The switch of a battery pack at relatively high SOC is turned on so as to discharge the battery pack. Similarly, the switch of a battery pack at relatively low SOC is turned on so as to charge the battery pack. In practice, the switch of the battery pack remains in the OFF state generally, and is turned on under control of the control device 11 in order to charge or discharge the battery pack.

Generally, a single switch is turned on in order to charge or discharge the corresponding battery pack singly. In addition, respective switches of adjacent battery packs at relatively high or low SOC are turned on in order to discharge or charge these battery packs simultaneously. For example, both the battery pack 131 and the battery pack 132 at relatively high SOC, and an upper switch of the battery pack 131 and a lower switch of the battery pack 132 are turned on to discharge the battery pack 131 and the battery pack 132 simultaneously.

The control device 11 is configured to determine, based on SOC of all the battery packs, the target battery pack at SOC to be regulated among the multiple battery packs, switch off a switch of the target battery pack, and regulate the SOC of the target battery pack through a loop where the bidirectional DC-to-DC device is arranged until all the battery packs are balanced in SOC.

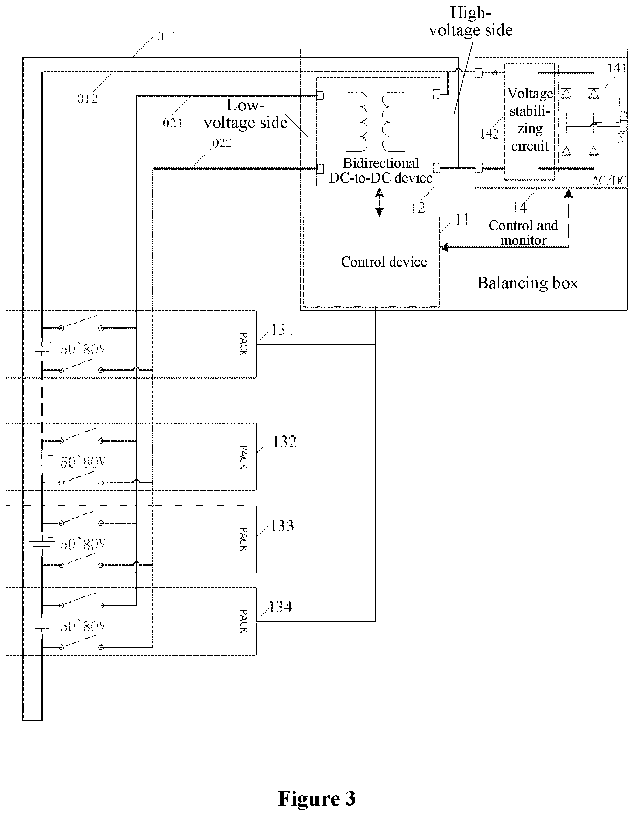

When few battery packs at relatively low SOC, the balance in the SOC between battery packs can be achieved through energy circulation. However, in practice, the battery pack string is of low battery when all the battery packs at relatively low SOC (e.g., real-time average SOC is less than preset average SOC threshold) or when a sum of voltages of all the battery packs is less than a preset total voltage. In this case, an external power supply may supply power to the battery packs. Referring to Figure 3, the energy storage system further includes an AC-to-DC device 14.

Input terminals (L and N) of the AC-to-DC device 14 are connected to the external power supply, for example, mains supply.

Output terminals of the AC-to-DC device 14 are connected in series to the battery packs and are connected to the first side of the bidirectional DC-to-DC device 12. The control device 11 is connected to a control terminal of the AC-to-DC device 14, to control and monitor the AC-to-DC device 14.

The control device 11 is further configured to control, if at least one of the battery packs is determined, based on the SOC of all the battery packs, to be charged and the input terminals of the AC-to-DC device 14 are already connected to the external power supply, to charge the determined battery pack.

The AC-to-DC device 14 includes a rectifying circuit 141 and a voltage stabilizing circuit 142.

Input terminals of the rectifying circuit 141 are connected to the external power supply. An output terminal of the rectifying circuit 141 is connected to an input terminal of the voltage stabilizing circuit 142. Output terminals of the voltage stabilizing circuit 142 are connected in series to the multiple battery packs and are connected to the first side of the bidirectional DC-to-DC device 12. A control terminal of the rectifying circuit 141 and a control terminal of the voltage stabilizing circuit 142 both are connected to the control device 11.

The output terminals of the voltage stabilizing circuit 142 are connected to the battery packs and the first side of the bidirectional DC-to-DC device 12 via diodes, for preventing backflow of the current.

The rectifying circuit 141, as illustrated in Figure 3, includes diodes which form two branches connected in parallel. The two branches each include two diodes that are connected in series. A joint of the two diodes in one of the two branches is connected to the terminal L, and the joint of the two diodes in the other branch is connected to the terminal N. Output terminals of the branches serve as the output terminals of the rectifying circuit 141.

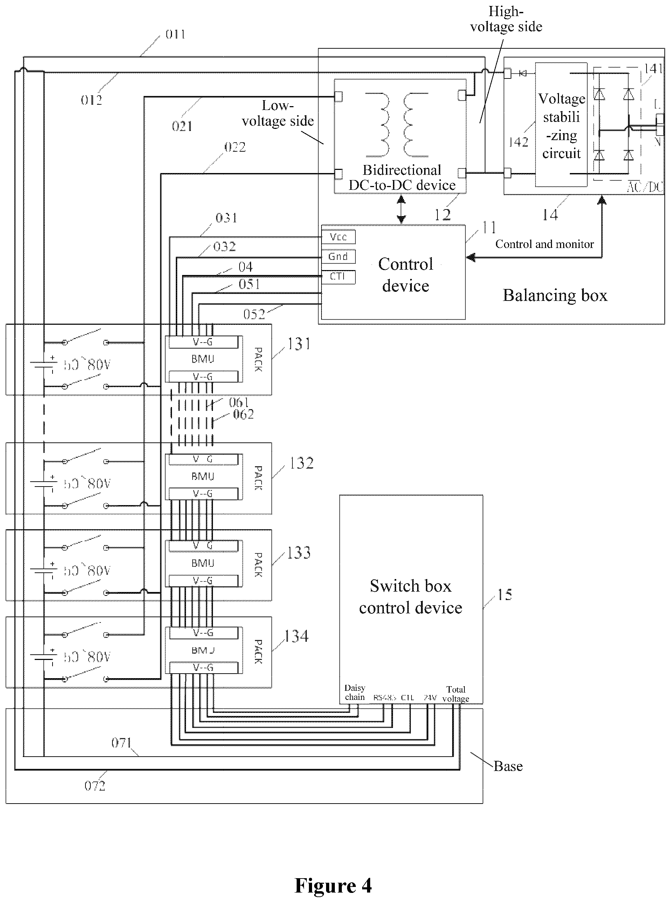

Referring to Figure 4, the control device 11 is further connected to a switch box control device 15 of the energy storage system via the battery packs.

Referring to Figure 4, the control device 11 is provided with a port Vcc, a port GnD, and a port CTL. The battery pack is provided with a battery management unit BMU inside. The BMU is provided with a port V-G for external connection.

The control device 11 is connected to a connection wire 031 via the port Vcc, and is connected to a connection wire 032 via the port GnD, and finally connected to a power supply of 24V of the switch box control device 15 via the battery packs, for power supplying.

The port CTL of the control device 11 is connected to a connection wire 04 and then is connected to the port CTL of the switch box control device 15 via the battery packs, for DCDC control, that is, to control the bidirectional DC-to-DC device 12 to step up or down the voltage.

The control device 11 is connected to a port RS485 of the switch box control device 15 via connection wires 051 and 052, for communication. For example, each battery pack reports the information such as SOC, the voltage, the capacity, and the cell temperature.

In addition, the battery packs communicate with each other through daisy chains 061 and 062, and are connected to a daisy chain port of the switch box control device 15.

A total voltage port of the switch box control device 15 is connected to terminals of the battery pack string through connection wires 071 and 072, respectively, for detecting a sum of voltages of all the battery packs.

The multiple battery packs and the switch box control device 15 are arranged on a base, for being fixed.

The energy storage system includes: the bidirectional DC-to-DC device, the control device, the battery packs, and respective switches of the battery packs. The control device is connected to the bidirectional DC-to-DC device, the battery packs, and the switches. The battery packs are connected in series to form the battery pack string which is connected to the first side of the bidirectional DC-to-DC device. The battery packs are connected to a second side of the bidirectional DC-to-DC device through respective switches. In response to the newly added battery pack, the control device determines, based on SOC of all the battery packs, the target battery pack at SOC to be regulated, switches off the switch of the target battery pack, and regulates the SOC of the target battery pack through a loop where the bidirectional DC-to-DC device is arranged until all the battery packs are balanced in SOC. In the present disclosure, with the energy storage system including the bidirectional DC-to-DC device, the control device and the battery packs as connected above, the battery packs that are off balance in SOC are automatically regulated in response to the newly added battery pack so as to balance all the battery packs in SOC, thereby improving operation reliability of the energy storage system.

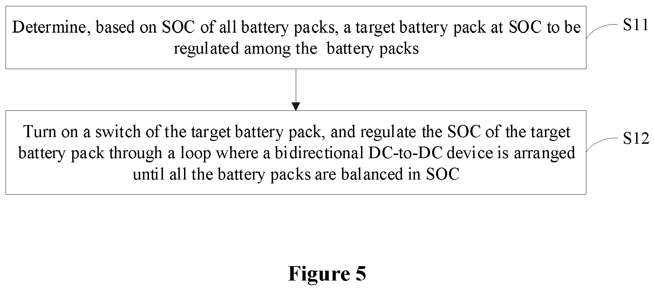

Based on the above, a method for battery balancing is provided according to another embodiment of the present disclosure. The method is applied to the control device in the energy storage system mentioned above. Referring to Figure 5, the method includes the following steps S11 and S12.

In S 11, a target battery pack at SOC to be regulated among the battery packs is determined based on SOC of all the battery packs.

The determined target battery pack is at SOC significantly different from other battery packs. SOC of the battery packs each are compared with real-time average SOC of all the battery packs to determine the battery pack at SOC with the greatest difference from the average SOC, to be regulated first.

In addition, battery packs at SOC with differences greater than a preset threshold from the real-time average SOC are all determined as the target battery pack, and are regulated sequentially in descending order of the differences.

It should be noted that the newly added battery pack, when being at SOC with a difference greater than the preset threshold from the real-time average SOC, is determined as the target battery pack.

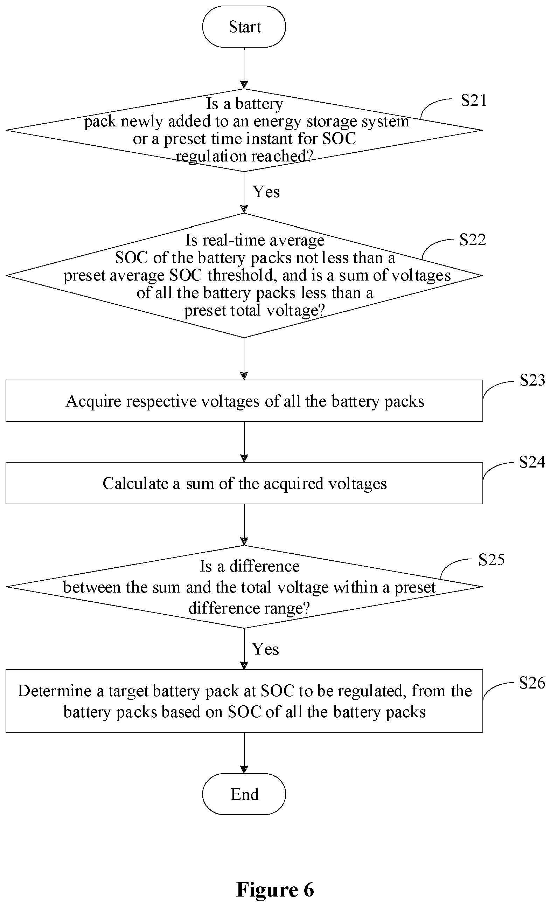

Referring to Figure 6, step S11 includes the following sub-steps S21 to S26 according to an embodiment of the present disclosure.

In S21, it is determined whether there is a newly added battery pack for the energy storage system or whether a preset time instant for SOC regulation is reached. The method proceeds to S22 when a newly added battery pack is found or the preset time instant is already reached.

Specifically, all the battery packs in the energy storage system are regulated in SOC when there is a newly added battery pack for the energy storage system. Alternatively, all the battery packs in the energy storage system are regulated in SOC at regular times. For example, the battery packs are monitored, and the SOC is regulated at five-day intervals.

In addition, a battery pack may be removed from the energy storage system.

In S22, it is determined whether the real-time average SOC of the battery packs is not less than a preset average SOC threshold and whether the sum of voltages of all the battery packs is not less than the preset total voltage. The method proceeds to S23 if the real-time average SOC is not less than the preset average SOC threshold and the sum of voltages is not less than the preset total voltage.

When there is a newly added battery pack for the energy storage system or the preset time instant is already reached, it is determined whether the real-time average SOC of the battery packs is not less than the preset average SOC threshold and whether the sum of voltages of all the battery packs is not less than the preset total voltage.

If the real-time average SOC of all the battery packs is not less than the preset average SOC threshold and the sum of respective voltages of all the battery packs is not less than the preset total voltage, the battery pack string is of not low battery and the battery packs can be balanced in SOC via the internal circulation.

If the real-time average SOC of the battery packs is less than the preset average SOC threshold and the sum of voltages of all the battery packs is less than the preset total voltage, the battery pack string is of low battery, and the battery packs are balanced in SOC via the external power supply instead of the internal circulation. Further, the battery pack string is charged via the external power supply.

The preset average SOC threshold and the preset total voltage are set by technicians depending on practical application scenarios.

In S23, respective voltages of all the battery packs are acquired.

The respective voltages of all the battery packs are acquired if the real-time average SOC of all the battery packs is not less than the preset average SOC threshold and the sum of respective voltages of all the battery packs is not less than the preset total voltage.

In this case, the control device acquires, through the RS485 port as shown in Figure 4, information such as the SOC, the voltage, the capacity, and the cell temperature reported by each battery pack.

In S24, the sum of the respective voltages of all the battery packs is calculated.

All the acquired voltages are added together to obtain the sum.

The respective voltages of the battery packs are added together in order to determine whether the respective voltages of the battery packs that are measured separately match the total voltage measured by the switch box control module.

In S25, it is determined whether a difference between the sum and the total voltage is within a preset difference range. The method proceeds to step S26 if the difference is within the preset difference range.

If the sum matches the total voltage, the energy storage system is of normal voltage and the battery balancing is allowed currently.

If the sum does not match the total voltage, the energy storage system is of abnormal voltage. In this case, all the battery packs are shut down under control of the control device. For example, the control device outputs a shutdown signal to the respective BMUs of the battery packs, for the BMUs to shut down the battery packs.

In S26, the target battery pack at the SOC to be regulated is determined based on the SOC of all the battery packs.

The SOC for each of the battery packs and a real-time average SOC for all the battery packs are acquired. The real-time average SOC is an average of the SOC of all the battery packs.

Battery packs at respective SOC with differences greater than the preset threshold from the real-time average SOC are determined, in descending order of the differences, as the target battery pack sequentially.

After the real-time average SOC is calculated, the battery packs at respective SOC with differences greater than the preset threshold from the real-time average SOC are determined, in descending order of the differences, as the target battery pack sequentially.

For example, there are five battery packs at SOC of 10, 15, 20, 25, and 50, respectively. The average SOC is equal to 24. The SOC is of 50, 10, 15, and 20 based on respective differences from the average SOC. The preset threshold is set to 5. Therefore, three battery packs at SOC of 50, 10, and 15 with differences greater than the preset threshold from the average SOC are determined as the target battery pack sequentially.

If there is no battery pack at SOC with a difference greater than the preset threshold from the real-time SOC average, the acquired number of battery packs is recorded at a preset position in the switch box control device.

The controller may store the number of BMUs, the sum of respective voltages of all the battery packs, and the total voltage of the battery pack string in a flash memory in the switch box control device.

In S 12, the switch of the target battery pack is turned on, and the SOC of the target battery pack is regulated through the loop where the bidirectional DC-to-DC device is arranged until a balance in SOC among all the battery packs is reached.

In practice, the switch of the target battery pack is turned on, a direction in which the current flowing thought the target battery pack is indicated, and the SOC of the target battery pack is regulated through the loop where the bidirectional DC-to-DC device is arranged until a balance in SOC among all the battery packs is reached.

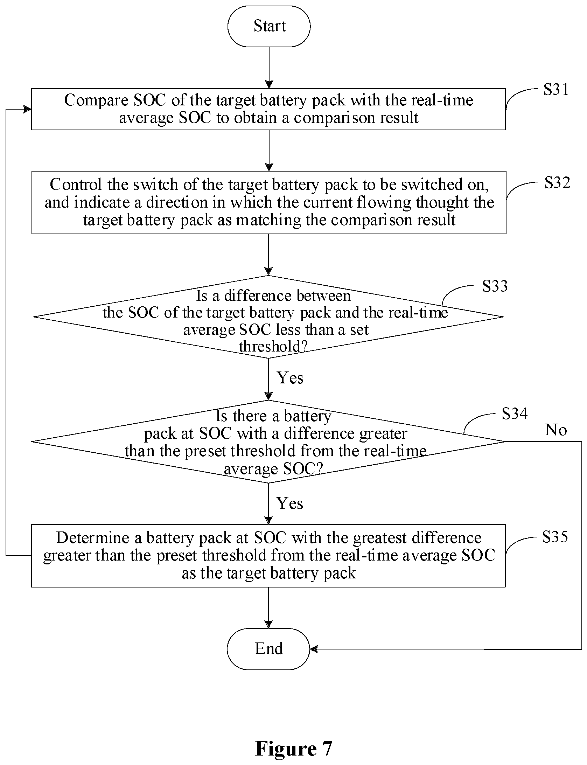

Referring to Figure 7, details about "the switch of the target battery pack is turned on, and the SOC of the target battery pack is regulated through the loop where the bidirectional DC-to-DC device is arranged until a balance in SOC among all the battery packs is reached" include the following sub-steps S31 to S35.

In S31, SOC of the target battery pack is compared with the real-time average SOC to obtain a comparison result.

It is compared whether the SOC of the target battery module is greater than or less than the real-time average SOC, to obtain the comparison result.

The comparison result indicates that the SOC of the target battery pack is greater than the real-time average SOC or indicates that the SOC of the target battery pack is less than the real-time average SOC.

In S32, the switch of the target battery pack is controlled to be turned on, and the direction in which the current flowing thought the target battery pack is indicated as matching the comparison result.

The target battery pack is determined singly. For example, the battery pack 131 as shown in Figure 1 is determined as the target battery pack, and therefore an instruction for turning on a switch is sent to the BMU in the battery pack 131. The BMU turns on the switch of the battery pack 131.

Then, the control device performs the DCDC control, i.e., controls, through the connection wire 04, the direction in which the current flows, which is detailed as follows. If the comparison result indicates that the SOC is greater than the real-time average SOC, the battery pack is to be discharged. In this case, the direction in which the current flowing thought the target battery pack is indicated for discharging, i.e., from the target battery pack to the second side of the bidirectional DC-to-DC device.

In this way, electrical power from the target battery pack is redistributed to the battery packs in the energy storage system.

If the comparison result indicates that the SOC is less than the real-time average SOC, the target battery pack is to be charged. The direction in which the current flowing thought the target battery pack is indicated as opposite to the direction for discharging. In this case, electrical power from other battery packs are supplied to the target battery pack.

It should be noted that when the SOC of the target battery pack is regulated through the loop where the bidirectional DC-to-DC device is arranged, balancing voltage and current are determined in real time for the battery balancing, and the battery balancing is monitored in real time.

In S33, it is determined whether a difference between the SOC of the target battery pack and the real-time average SOC is less than a set threshold. The method proceeds to S34 if the difference is less than the set threshold.

The target battery pack is at changing SOC when being charged or discharged. Similarly, the real-time average SOC of all the battery packs is changing. In addition, the SOC of the target battery pack is approaching the real-time average SOC of all the battery packs.

If the difference between the SOC of the target battery pack and the real-time average SOC is less than the set threshold (e.g., approximating 0), the SOC of the target battery pack approximates the real-time average SOC. In this case, the target battery pack stops being charged or discharged.

In S34, it is determined whether there is a battery pack at SOC with a difference greater than the preset threshold from the real-time average SOC. The method proceeds to S35 if a battery pack at SOC with a difference greater than the preset threshold from the real-time average SOC is found.

The previously determined target battery pack may at SOC approximating the real-time average SOC and therefore is unnecessarily charged or discharged due to the fact that the real-time average SOC is changing. In view of this, it is re-determined whether there is a battery pack at SOC with a difference greater than the preset threshold from the real-time average SOC.

In S35, a battery pack at SOC with the greatest difference greater than the preset threshold from the real-time average SOC is determined as the target battery pack.

The battery pack at SOC with the difference greater than the preset threshold from the real-time average SOC, if found, is to be charged or discharged. In view of this, another target battery pack at SOC with the greatest difference greater than the preset threshold from the real-time average SOC is determined.

The method returns to S31 after S35 until the balance in SOC among all the battery packs is reached. The balance herein refers to that all the battery packs reach SOC with a difference less than the set threshold from the real-time average SOC, i.e., all the battery packs reach SOC approximating the real-time average SOC. That is, all the battery packs reach SOC with a minimum difference between each other, and therefore are balanced.

In order for clear understanding of the present disclosure by those skilled in the art, the battery balancing is detailed below with the example in which the five battery packs are at SOC of 10, 15, 20, 25, and 50, respectively, and the average SOC is equal to 24.

The battery balancing is detailed as follows.

1) Battery packs to be balanced, e.g., M10, M15 and M50 are determined (as described above).

2) The three determined battery packs shall reach SOC equal to Mx after the balancing. Since electrical power remains approximately constant before and after the balancing, there is an equation of 10+15+20+25+50=3*Mx+20+25, and therefore Mx is calculated to 25. That is, M10, M15 and M50 each reach capacity of M25 after the balancing.

3) For example, electrical power form M10, M15, and M50 during the balancing is X1, X2, and X3, respectively. Calculation is made from the following equations.

$$10-X1+((X1+X2+X3)/5)=25,$$

$$15-X2+((X1+X2+X3)/5)=25,$$

$$20+((X1+X2+X3)/5)=20,$$

$$25+((X1+X2+X3)/5)=25,$$

and

$$50-X3+((X1+X2+X3)/5)=25.$$

Therefore, X1 is calculated as -5, X2 is calculated as -10, and X3 is calculated as 25.

4) A battery balancer balances the three battery packs M10, M15 and M50. That is, M10 is charged by five units of SOC, M15 is charged by ten units of SOC, and M5 is discharged twenty-five units of SOC. After the balancing, the five battery packs are at SOC of 25, 25, 20, 25 and 25 respectively if no loss is taken into account.

The real-time average SOC is 24, and all the five battery packs already reach SOC with a difference less than 5 from the real-time average SOC. In this case, the balance among all the battery packs is reached.

A shutdown instruction is sent to respective BMUs of the battery packs when the balance in SOC among all the battery packs is reached, so that the BMUs shut down the battery packs.

The battery packs at SOC to be regulated are charged or discharged, based on the SOC of all the battery packs, through the loop formed by the bidirectional DC-to-DC device so that all the battery packs are balanced in SOC.

In addition, the battery balancing herein is adapted to the newly added battery pack as needed. The energy storage system can automatically perform the battery balancing in response to the newly added battery pack instead of manually modifying parameters of the energy storage system, and therefore is more automated and user-friendly.

In addition, the energy storage system herein involves no professional battery system maintenance device. Instead, the control device regularly calibrates a total capacity of the system and respective capacities of the battery packs through charging and discharging and balances the battery packs, in order to acquire information about the battery packs accurately. Self-balancing is performed in response to imbalance, thereby extending a service life of the system and improving capacity redistribution of the system.

In other embodiments, the energy storage system includes the AC-to-DC device as illustrated in Figure 3. If the real-time average SOC of the battery packs is less than the preset average SOC threshold or the sum of voltages of all the battery packs is less than the preset total voltage, the battery pack string is of low battery and an external power supply is necessary. In this case, all the battery packs are balanced in SOC and then are charged.

In this case, the method for battery balancing further includes: charging, when it is determined based on the SOC of all the battery packs that at least one of the battery packs is to be charged and an input terminal of the AC-to-DC device is already connected to an external power supply, the determined battery pack.

The determination, based on the SOC of all the battery packs, of the battery pack to be charged is detailed as follows. The SOC of each of the battery packs is acquired, and battery packs at SOC less than the highest SOC are all determined as to be charged sequentially.

The battery packs at SOC less than the highest SOC are all charged to reach the highest SOC, in order to be balanced in SOC. The battery packs are charged singly.

In addition, the battery pack is charged as follows.

1) A switch of the battery pack is controlled to be switched on and a direction in which the current flowing through the battery pack is indicated to a preset direction, and then the battery pack is charged until reaching the highest SOC. The preset direction is from the AC-to-DC device to the first side of the bidirectional DC-to-DC device.

Specifically, the current flows through the AC-to-DC device, the first side of the bidirectional DC-to-DC device, the second side of the bidirectional DC-to-DC device, and the charged battery pack sequentially.

Referring to Figure 3, the battery pack is charged by the external power supply via the AC-to-DC device and the bidirectional DC-to-DC device until reaching the highest SOC.

Battery packs are charged one by one until all reaching the highest SOC.

2) When all reaching the highest SOC, the battery packs are charged via a loop formed by the battery packs and the AC-to-DC device until all reaching SOC greater than the preset SOC threshold.

When all the battery packs are already reach the highest SOC, the direction in which the current flows is regulated. In this case, the bidirectional DC-to-DC device does not operate, and all the battery packs are charged together through the loop formed by the AC-to-DC device and the battery packs until reaching SOC greater than the preset SOC threshold. The preset SOC threshold may be 90% or the like, depending on practical application scenarios.

It should be noted that when the SOC of the target battery pack is regulated, balancing voltage and current are determined in real time for the battery balancing, and the battery balancing is monitored in real time.

In addition, a shutdown instruction is sent to respective BMUs of the battery packs when all the battery packs already reach the preset SOC threshold, so that the BMUs shut down the battery packs.

When the battery pack string is of low battery, the battery packs are charged singly to reach approximately equal SOC and then are charged together until all reaching the SOC threshold as required.

Moreover, the battery packs can be regulated to be balanced in SOC at regular times. The battery balancing is automatically implemented by the control device, and thus is highly automated.

Furthermore, the battery packs in the energy storage system can be charged by an external AC power supply simply.

The disclosed embodiments are described above, so that those skilled in the art can implement or use the present disclosure. Those skilled in the art can readily made various modifications to these embodiments. The general principles defined herein may be implemented in other embodiments without departing from the spirit and scope of the present disclosure. The present invention is therefore to be accorded the widest scope consistent with the principles and novel features disclosed herein instead of being limited to the embodiments shown herein.

**Claims**

1. A method for battery balancing, wherein the method is applied to a control device comprised in an energy storage system; the energy storage system comprises a bidirectional DC-to-DC device, battery packs, and respective switches of the battery packs besides the control device; the control device is connected to the bidirectional DC-to-DC device, the battery packs and the switches; the battery packs are connected in series to a first side of the bidirectional DC-to-DC device; and the battery packs are connected to a second side of the bidirectional DC-to-DC device via the switches; and the method comprises:

   determining, based on SOC of all the battery packs, a target battery pack at the SOC to be regulated among the battery packs; and controlling the switch of the target battery pack to be switched on and regulating the SOC of the target battery pack through a loop where the bidirectional DC-to-DC device is arranged, until all the battery packs are balanced in SOC.

2. The method according to claim 1, wherein the determining, based on the SOC of the battery packs, the target battery pack at the SOC to be regulated among the battery packs comprises:

   determining whether a real-time average SOC of all the battery packs is not less than a preset average SOC threshold and determining whether a total voltage of all the battery packs is not less than a preset total voltage, in response to a newly added battery pack of the energy storage system or when a preset time instant for SOC regulation is reached; acquiring respective voltages of all the battery packs, if it is determined that the real-time average SOC is not less than the preset average SOC threshold and the total voltage is not less than the preset total voltage; adding the acquired voltages to obtain a sum; determining whether a difference between the sum and the total voltage is within a preset difference range; and determining, based on the SOC of all the battery packs, the target battery pack at the SOC to be regulated among all the battery packs, if it is determined that the difference is within the preset difference range.

3. The method according to claim 2, wherein the determining, based on the SOC of all the battery packs, the target battery pack at the SOC to be regulated among all the battery packs comprises:

> acquiring the SOC for each of all the battery packs and the real-time average SOC of all the battery packs; and
> selecting, from all the battery packs, battery packs at SOC with differences greater than a preset threshold from the real-time average SOC, and sequentially determining the selected battery packs as the target battery pack in descending order of the differences.

4. The method according to claim 1, wherein the controlling the switch of the target battery pack to be switched on and regulating the SOC of the target battery pack through the loop where the bidirectional DC-to-DC device is arranged, until all the battery packs are balanced comprises:
turning the switch of the target battery pack on, indicating a direction in which a current flowing through the target battery pack, and regulating the SOC of the target battery pack through the loop where the bidirectional DC-to-DC device is arranged, until all the battery packs are balanced.

5. The method according to claim 4, wherein the turning the switch of the target battery pack on, indicating the direction in which the current flowing through the target battery pack, and regulating the SOC of the target battery pack through the loop where the bidirectional DC-to-DC device is arranged, until all the battery packs are balanced comprises:

> comparing the SOC of the target battery pack with a real-time average SOC of all the battery packs to obtain a comparison result;
> turning the switch of the target battery pack on, and indicating the direction in which the current flowing through the target battery pack as matching the comparison result;
> determining in real time whether a difference between the SOC of the target battery pack and the real-time average SOC is less than a set threshold while regulating the SOC of the target battery pack according to the indicated direction; and
> selecting, when the difference between the SOC of the target battery pack and the real-time average SOC is less than the set threshold and from all the battery packs, another battery pack at SOC with a greatest difference greater than a preset threshold from the real-time average SOC, and determining the selected battery pack as the target battery pack, and comparing the SOC of the target battery pack with the real-time average SOC to obtain the comparison result, until all the battery packs are balanced.

6. The method according to claim 5, wherein the indicating the direction in which the current flowing through the target battery pack as matching the comparison result comprises:

> indicating the direction for discharging, if the comparison result indicates that the SOC of the target battery pack is greater than the real-time average SOC, wherein the direction for discharging is from the target battery pack to the second side of the bidirectional DC-to-DC device; and
> indicating the direction for charging, if the comparison result indicates that the SOC of the target battery pack is less than the real-time average SOC, wherein the direction for charging is opposite to the direction for discharging.

7. The method according to claim 2, further comprising:
shutting all the battery packs down when it is determined that the difference between the sum and the total voltage is not within the preset difference range.

8. The method according to claim 2, wherein the energy storage system comprises an AC-to-DC device, and the method further comprises:
charging, if it is determined based on the SOC of all the battery packs that at least one battery pack among all the battery packs is to be charged and an input terminal of the AC-to-DC device is already connected to an external power supply, the determined battery pack, when it is determined that the real-time average SOC is less than the preset average SOC threshold or that the sum is less than the preset total voltage.

9. The energy balance method according to claim 8, wherein the battery pack to be charged is determined by:

> acquiring the SOC for each of all the battery packs; and
> sequentially determining all the battery packs at SOC less than a highest SOC as the battery pack to be charged.

10. The method according to claim 9, wherein the charging the determined battery pack comprises:

> turning the switch of the determined battery pack on, indicating a direction in which a current flowing through the determined battery pack to a preset direction, and charging the determined battery pack until the determined battery pack reaches the highest SOC, wherein the preset direction is from the AC-to-DC device to the first side of the bidirectional DC-to-DC device; and
> charging all the battery packs, when all reaching the highest SOC, via a loop formed by the battery packs and the AC-to-DC device, until all the battery packs reach SOC greater than a preset SOC threshold.

11. The method according to claim 3, further comprising: recording the number of all the battery packs at a preset position in a switch box control device, in case of no battery pack at SOC with the difference greater than the preset threshold from the real-time average SOC.

12. An energy storage system, comprising:

a bidirectional DC-to-DC device;
a control device;
battery packs; and
respective switches of the battery packs, wherein
the control device is connected to the bidirectional DC-to-DC device, the battery packs, and the switches; the battery packs are connected in series to a first side of the bidirectional DC-to-DC device; and the battery packs are connected to a second side of the bidirectional DC-to-DC device through the switches; and
the control device is configured to: determine, based on SOC of all the battery packs, a target battery pack at SOC to be regulated among the battery packs; and control the switch of the target battery pack to be switched on and regulate the SOC of the target battery pack through a loop where the bidirectional DC-to-DC device is arranged, until all the battery packs are balanced in SOC.

13. The energy storage system according to claim 12, further comprising:

an AC-to-DC device, wherein
an input terminal of the AC-to-DC device is configured to be connected to an external power supply; and an output terminal of the AC-to-DC device is connected in series to the battery packs and is connected to the first side of the bidirectional DC-to-DC device; and a control terminal of the AC-to-DC device is connected to the control device; and
the control device is further configured to perform controlling to charge, if it is determined based on the SOC of all the battery packs that at least one battery pack among all the battery packs is to be charged and the input terminal of the AC-to-DC device is already connected to the external power supply, the determined battery pack.

14. The energy storage system according to claim 13, wherein the AC-to-DC device comprises a rectifying circuit and a voltage stabilizing circuit, wherein an input terminal of the rectifying circuit is configured to be connected to the external power supply; an output terminal of the rectifying circuit is connected to an input terminal of the voltage stabilizing circuit; an output terminal of the voltage stabilizing circuit is connected in series to the battery packs and is connected to the first side of the bidirectional DC-to-DC device; and a control terminal of the rectifying circuit and a control terminal of the voltage stabilizing circuit are connected to the control device.

15. The energy storage system according to claim 12, wherein the control device is further connected to a switch box control device in the energy storage system via the battery packs.

**Figure 1**

**Figure 2**

**Figure 3**

**Figure 4**

Determine, based on SOC of all battery packs, a target battery pack at SOC to be regulated among the battery packs — S11

Turn on a switch of the target battery pack, and regulate the SOC of the target battery pack through a loop where a bidirectional DC-to-DC device is arranged until all the battery packs are balanced in SOC — S12

**Figure 5**

Start

Is a battery
pack newly added to an energy storage system
or a preset time instant for SOC
regulation reached?  — S21

Yes

Is real-time average
SOC of the battery packs not less than a
preset average SOC threshold, and is a sum of voltages
of all the battery packs less than a
preset total voltage?  — S22

Acquire respective voltages of all the battery packs  — S23

Calculate a sum of the acquired voltages  — S24

Is a difference
between the sum and the total voltage within a preset
difference range?  — S25

Yes

Determine a target battery pack at SOC to be regulated, from the
battery packs based on SOC of all the battery packs  — S26

End

**Figure 6**

Start

Compare SOC of the target battery pack with the real-time average SOC to obtain a comparison result — S31

Control the switch of the target battery pack to be switched on, and indicate a direction in which the current flowing thought the target battery pack as matching the comparison result — S32

Is a difference between the SOC of the target battery pack and the real-time average SOC less than a set threshold? — S33

Yes

Is there a battery pack at SOC with a difference greater than the preset threshold from the real-time average SOC? — S34    No

Yes

Determine a battery pack at SOC with the greatest difference greater than the preset threshold from the real-time average SOC as the target battery pack — S35

End

**Figure 7**

## INTERNATIONAL SEARCH REPORT

| International application No. |
| --- |
| **PCT/CN2022/094950** |

| **A.** | **CLASSIFICATION OF SUBJECT MATTER** |
| --- | --- |

H02J 7/00(2006.01)i; H02M 3/335(2006.01)i; H01M 10/44(2006.01)i

According to International Patent Classification (IPC) or to both national classification and IPC

| **B.** | **FIELDS SEARCHED** |
| --- | --- |

Minimum documentation searched (classification system followed by classification symbols)

H02J H02M H01M

Documentation searched other than minimum documentation to the extent that such documents are included in the fields searched

Electronic data base consulted during the international search (name of data base and, where practicable, search terms used)

DWPI; SIPOABS; CNTXT; USTXT; CNKI; IEEE: 电池, 状态, 电压, 均值, 和, 总, 均衡, 平衡, 均, 外部电源, 外接电源, 新, 增, 模块, 模组, 充电, 放电, 双向, 阈值, 预设, 参考; cell, battery, voltage, Average, total, balance, source, new, SOC, DC/DC, add, increase, Module, charge, discharge, threshold, preset, reference

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 113394852 A (SUNGROW POWER SUPPLY CO., LTD.) 14 September 2021 (2021-09-14)<br>claims 1-15 | 1-15 |
| X | US 2014042974 A1 (YANG, J. H. et al.) 13 February 2014 (2014-02-13)<br>description, paragraphs [0045]-[0110], and figures 1-6 | 1-15 |
| X | CN 112865232 A (HARBIN INSTITUTE OF TECHNOLOGY, SHENZHEN) 28 May 2021 (2021-05-28)<br>description, paragraphs [0045]-[0103], and figures 1-6 | 1-15 |
| A | CN 103606943 A (SHENZHEN NATIONAL ENGINEERING RESEARCH CENTER OF ADVANCED ENERGY STORAGE MATERIALS CO., LTD.) 26 February 2014 (2014-02-26)<br>entire document | 1-15 |
| A | CN 109435773 A (BYD CO., LTD.) 08 March 2019 (2019-03-08)<br>entire document | 1-15 |

| ☐ Further documents are listed in the continuation of Box C. | ☑ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| | **05 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/094950**

| Patent document cited in search report | | | Publication date (day/month/year) | Patent family member(s) | | | Publication date (day/month/year) |
|---|---|---|---|---|---|---|---|
| CN | 113394852 | A | 14 September 2021 | None | | | |
| US | 2014042974 | A1 | 13 February 2014 | US | 2017288422 | A1 | 05 October 2017 |
| | | | | WO | 2012144674 | A1 | 26 October 2012 |
| | | | | US | 10680447 | B2 | 09 June 2020 |
| CN | 112865232 | A | 28 May 2021 | None | | | |
| CN | 103606943 | A | 26 February 2014 | CN | 103606943 | B | 24 February 2016 |
| CN | 109435773 | A | 08 March 2019 | WO | 2019042365 | A1 | 07 March 2019 |
| | | | | CN | 109435773 | B | 28 February 2022 |

Form PCT/ISA/210 (patent family annex) (January 2015)

**REFERENCES CITED IN THE DESCRIPTION**

**Patent documents cited in the description**

- CN 202110806593